# FASCICULE DE BREVET EUROPEEN

(11) **EP 2 915 113 B1**
(45) Date de publication et mention de la délivrance du brevet: **03.09.2025**
(21) Numéro de dépôt: 13801632.4
(22) Date de dépôt: 30.10.2013
(51) Int. Cl.: H04L 51/224

(54) **GESTION PERFECTIONNÉE D'UNE BASE DE MESSAGES**
VERBESSERTE VERWALTUNG EINES NACHRICHTENSPEICHERS
IMPROVED MANAGEMENT OF A MESSAGE STORE

(30) Priorité: 05.11.2012 FR 1260481
(43) Date de publication de la demande: 09.09.2015
(73) Titulaire: Merci, 75002 Paris (FR)
(72) Inventeur: VERET, Grégory, F-75018 Paris (FR)
(74) Mandataire: Plasseraud IP
(86) Numéro de dépôt international: PCT/FR2013/052599
(87) Numéro de publication internationale: WO 2014/068252

(56) Documents cités:
- EP-A2- 1 401 176
- WO-A1-2011/112385
- US-A1- 2006 221 863
- US-A1- 2008 317 228
- US-A1- 2009 271 486
- US-A1- 2010 057 869
- US-A1- 2011 078 247
- US-A1- 2011 131 281
- US-B2- 8 073 122

## Description

La présente invention concerne la gestion d'une base de messages transmis via un réseau de communication.

Plus particulièrement, la base de messages est gérée par un serveur de messagerie. La gestion de cette base est mise en œuvre notamment dans une réalisation où un terminal émetteur d'un message transmet ce message au serveur de messagerie précité et ce dernier retransmet ce message à un terminal destinataire selon des règles prédéfinies.

Une application de la gestion précitée de base de messages concerne notamment la situation où le terminal émetteur a envoyé un message donné par erreur, par exemple. Ainsi, le terminal émetteur peut envoyer une requête de non distribution de ce message, ou, plus particulièrement, d'effacement de ce message avant que le serveur de messagerie ne l'oriente vers un terminal destinataire. Toutefois, entre le moment où le message est envoyé par erreur et le moment où le terminal émetteur envoie cette requête, le terminal destinataire a pu recevoir le message et un utilisateur en a déjà pris connaissance.

On connait des réalisations existantes (notamment l'application de messagerie *« Outlook* »^{©}) qui mentionnent que de tels messages ont été *« rappelés »* par leur émetteur sans toujours en effacer le contenu, ce qui ne fait en réalité qu'attirer l'attention de l'utilisateur du terminal destinataire sur ces messages. US 2011/0131281 et US 8,073,122 décrivent par exemple de telles fonctionnalités.

La présente invention vient améliorer la situation.

A cet effet, elle propose d'affecter à de tels messages un statut qui correspond, de façon plus générale, à un statut de message en cours d'expiration, en tenant compte toutefois de la possibilité au terminal destinataire d'avoir eu accès ou non à ce message. Ainsi, la présente invention propose de détecter si le terminal destinataire est connecté ou non au serveur de messagerie.

L'invention vise alors un procédé selon la revendication 1, un serveur de messagerie selon la revendication 11 et un programme informatique selon la revendication 12.

Ainsi, en fonction de la détection de connexion ou de non-connexion du terminal destinataire au serveur de messagerie, des règles particulières peuvent être mises en œuvre pour gérer un message auquel il a été affecté un statut de message en cours d'expiration.

Par exemple, dans une réalisation possible, le message peut être effacé dès l'affectation du statut précité, de message en cours d'expiration. Cet effacement peut s'effectuer auprès du serveur de messagerie lui-même par exemple dans le cas où le terminal destinataire n'a pas été détecté comme étant déjà connecté au serveur. Une telle réalisation signifie que le terminal destinataire, n'étant pas connecté, n'a pas pu recevoir le message et que ce message peut directement être effacé auprès du serveur de messagerie. Ainsi, le terminal initialement destinataire du message ne reçoit finalement pas le message, ni aucune information particulière relative à ce message.

Ainsi, de façon plus générale, dans le cas où le terminal destinataire a été détecté comme non-connecté au serveur de messagerie, ce dernier peut gérer le message en cours d'expiration selon des règles prédéfinies (par exemple son effacement, ou un effacement après temporisation comme on le verra plus loin dans un exemple de réalisation, ou autres), sans que le terminal destinataire ne reçoive aucune information particulière concernant ce message.

Ainsi, dans une réalisation, si le terminal n'est pas détecté comme connecté, le serveur de messagerie affecte au message un statut général de message en cours d'expiration.

En revanche, si le terminal est détecté comme connecté, le serveur, dans une réalisation particulière, peut ne transmettre aucune commande particulière au terminal destinataire et le message conserve un statut en cours auprès du terminal destinataire. Par exemple, si le message a un statut de message déjà lu (ou, au contraire, non lu) auprès du terminal destinataire, il conserve un statut de message lu (ou respectivement, non lu).

Bien entendu, d'autres règles peuvent être prévues notamment dans le cas où le message a été préalablement envoyé au terminal destinataire. Dans ce cas, sur réception d'une commande d'expiration du message préalablement envoyé au terminal destinataire, le serveur de messagerie peut transmettre au terminal une commande d'affectation audit message d'un statut de message en cours d'expiration auprès du terminal destinataire. Dans ce cas, le terminal destinataire peut gérer lui-même l'expiration du message selon des règles propres (effacement, ou effacement après temporisation, ou expiration après temporisation, ou simplement expiration).

La commande d'expiration reçue du terminal émetteur est accompagnée d'un paramètre de temporisation, et, pour un message en cours d'expiration :
- on applique une temporisation fonction de ce paramètre, et
- on affecte au message un statut de message expiré après ladite temporisation.

Par exemple, le paramètre peut être une durée prédéterminée, ou une date donnée, ou encore une condition sur un évènement donné (par exemple, visant à effacer le message en cas de défaite d'une équipe sportive), ou autres.

Ainsi, dans une application où un message particulier a un intérêt dans une période prédéterminée (réunion en cours à un jour donné et pendant une durée donnée, ou encore une offre commerciale pendant une période donnée), le serveur de messagerie peut transmettre au terminal destinataire la commande d'affectation au message du statut « *en cours d'expiration ».* Ainsi, après la période prédéterminée, le message a un statut « *expiré »* auprès du terminal.

Ces étapes d'application de la temporisation et d'affectation du statut « *expiré »* peuvent être mises en œuvre auprès du terminal destinataire, par exemple. En variante, elles peuvent être mises en œuvre par le serveur lui-même. En effet, dans une réalisation, le serveur détecte si le terminal destinataire est connecté ou non et, tant que le terminal n'est pas détecté comme connecté, applique la temporisation jusqu'à expiration du message.

De façon générale, on peut prévoir par exemple qu'un message, après la temporisation, a le statut d'un message expiré, et qu'alors, ce message est effacé.

Ainsi, dans l'exemple ci-dessus où le serveur met en œuvre la temporisation, le serveur peut ensuite effacer le message si le terminal destinataire n'a pas été détecté comme connecté pendant la temporisation.

Dans le cas notamment où le terminal a reçu le message en cours d'expiration ou expiré, on peut prévoir, dans une réalisation, qu'un message à statut de message expiré est conservé auprès du terminal destinataire, avec une indication d'expiration du message. Cette réalisation permet à un utilisateur du terminal destinataire de voir par exemple qu'une réunion a eu lieu ou qu'une promotion commerciale a eu lieu, à une période désormais expirée néanmoins.

Dans un mode de réalisation, l'affectation du statut de message *« en cours d'expiration »* peut faire suite à une requête d'expiration reçue d'un terminal émetteur du message. Par exemple, la suppression d'un message (dans une rubrique du type « *en cours d'envoi* ») auprès du terminal émetteur peut provoquer l'émission de la requête d'expiration vers le serveur (qui peut être interprétée par le serveur de messagerie par une demande d'effacement si, par exemple, elle n'est pas accompagnée d'un paramètre de temporisation, auquel cas le serveur pourra effacer le message si le terminal destinataire n'est pas détecté comme étant connecté).

Dans une réalisation, la détection de connexion du terminal au serveur de messagerie peut comporter la détection de connexion du terminal à un serveur intermédiaire (un serveur tiers) qui peut être connecté au serveur de messagerie. Par exemple, le serveur intermédiaire peut correspondre à un serveur d'application de réseau social (Facebook, par exemple).

Ainsi, le serveur de messagerie peut interroger répétitivement le serveur intermédiaire pour obtenir une information de connexion ou de non-connexion du terminal destinataire au serveur intermédiaire et, de là, interpréter toute connexion éventuelle comme signifiant que le terminal destinataire est connecté au réseau et qu'il est ainsi susceptible de se connecter aussi au serveur de messagerie.

Dans une variante, le serveur intermédiaire peut comporter des moyens de connexion du terminal destinataire au serveur de messagerie (par exemple un lien vers le serveur de messagerie, sur une page WEB associée au serveur intermédiaire). Une utilisation de ces moyens de connexion par le terminal destinataire peut alors provoquer la transmission au serveur de messagerie d'une information de connexion du terminal destinataire au serveur de messagerie.

Dans une variante plus perfectionnée encore, le serveur intermédiaire peut comporter des moyens de connexion instantanée du terminal destinataire au serveur de messagerie et une connexion du terminal destinataire au serveur intermédiaire provoque une connexion du terminal destinataire au serveur de messagerie.

Une telle réalisation peut être mise en œuvre aussi auprès du terminal émetteur. Ainsi, par exemple, la commande d'expiration du message peut être lancée par le terminal émetteur du message, via le serveur intermédiaire précité (par exemple le rappel d'un message envoyé peut être commandé sur le terminal émetteur, via une page WEB associée au serveur intermédiaire, puis transmis au serveur de messagerie). Une telle réalisation peut être avantageuse, par exemple, dans un contexte où un destinataire peut prendre connaissance du message lorsque celui-ci s'affiche dans une interface WEB (comme une page Facebook^{®} par exemple), via une application spécifique de messagerie au sens de l'invention.

La présente invention vise aussi un serveur intermédiaire, du type précité, dès lors qu'un tel serveur peut aider à la détection de connexion ou de non-connexion du terminal destinataire, ou encore participer à la transmission des requêtes de rappel, effacement, ou expiration d'un message émis par le terminal destinataire. Il contribue ainsi, en tant que moyen essentiel, à la mise en œuvre de certains modes de réalisation de la présente invention.

D'autres avantages et caractéristiques de l'invention apparaîtront à la lecture de la description, détaillée ci-après, d'exemples de réalisation et à l'examen des dessins correspondants, sur lesquels :
- la figure 1 illustre un contexte de mise en œuvre de la présente invention, faisant intervenir un serveur de messagerie SM au sens de l'invention,
- la figure 2 illustre un mode de réalisation particulier pour la détection de connexion ou de non-connexion du terminal destinataire TD, et faisant intervenir un serveur intermédiaire SI,
- la figure 3 illustre schématiquement les étapes principales qui suivent une détection de connexion ou de non-connexion du terminal destinataire TD, pour l'affectation d'un statut « expiré » à un message en fonction de cette détection,
- la figure 4 illustre un mode de réalisation particulier, dans lequel on applique une temporisation avant expiration définitive du message, et
- la figure 5 représente schématiquement un exemple de serveur de messagerie SM pour la mise en œuvre de l'invention.

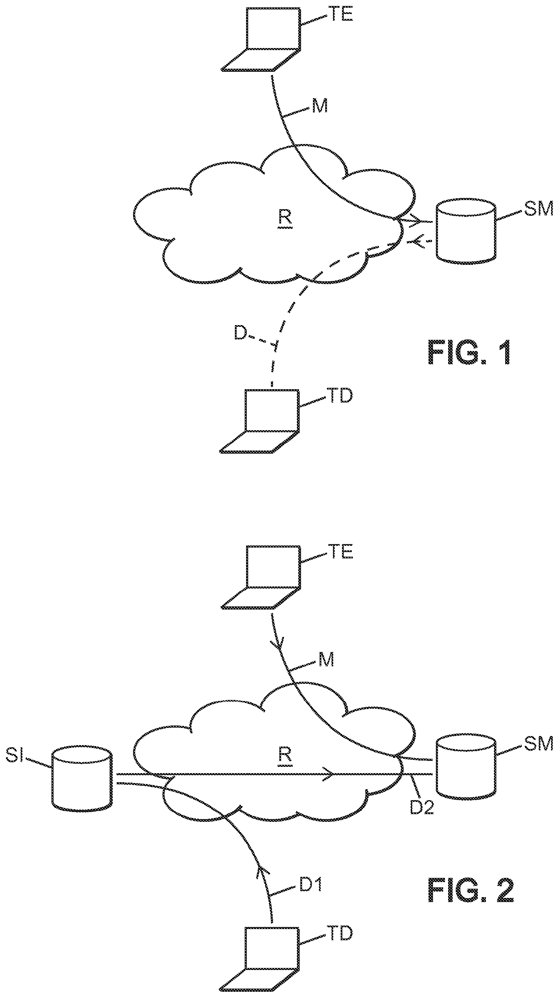

On se réfère tout d'abord à la figure 1 sur laquelle un terminal émetteur TE d'un message M, un serveur de messagerie SM et un terminal destinataire d'un message M, peuvent communiquer ensemble via un réseau de communication R (tel que, par exemple, l'Internet). Plus particulièrement, le serveur de messagerie SM centralise les échanges de messages entre les différents terminaux et gère une base de messages M, à cet effet. Dans un contexte possible d'application de la présente invention, le terminal émetteur TE requiert auprès du serveur de messagerie SM que le message M, destiné au terminal destinataire TD, ait un statut de message expiré.

Par exemple, le terminal émetteur TE peut souhaiter que le message M ne soit pas lu, finalement, par le terminal destinataire TD (le message M ayant été envoyé par erreur, par exemple). Dans une autre réalisation, il peut simplement être prévu que le message M ait un statut de message en cours d'expiration, ou un statut de message expiré, bien qu'il ait été reçu par le terminal destinataire TD.

Au sens de l'invention, l'affectation d'un tel statut (voire encore l'effacement du message M sans qu'il ne soit transmis au terminal TD) dépend d'un état de connexion ou de non-connexion du terminal destinataire TD au serveur de messagerie SM.

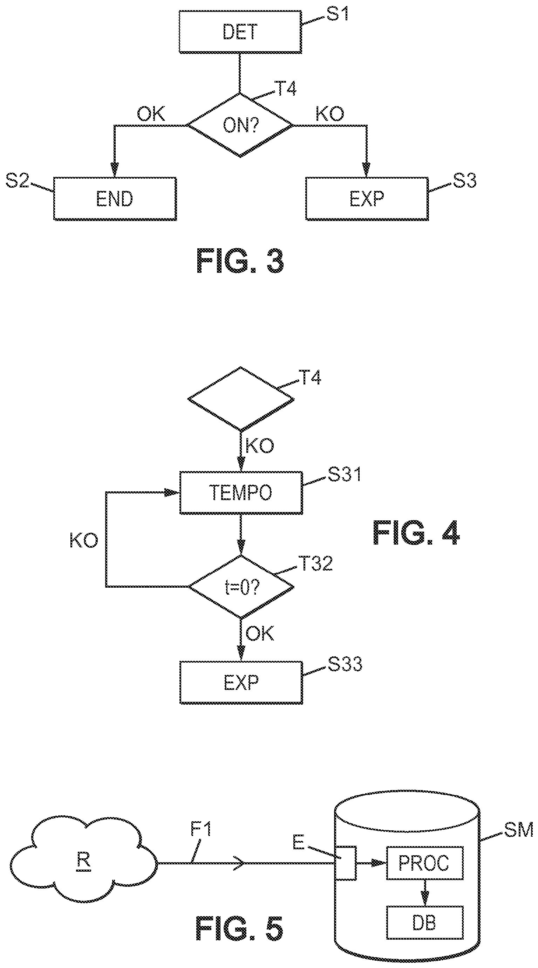

On a représenté à cet effet sur la figure 5 un serveur de messagerie SM comportant par exemple une entrée E pour recevoir une requête d'expiration d'un message donné, préalablement envoyé par un terminal émetteur TE. Le serveur dispose en outre de moyens, tels qu'un processeur PROC et une mémoire stockant les données d'une base de messages DB, pour retrouver le message et lui affecter un statut d'expiration (en fonction d'une détection de connexion ou de non-connexion du terminal destinataire). La détection de connexion ou de non-connexion précitée peut être effectuée auprès du serveur de messagerie, par exemple par reconnaissance d'une adresse IP du terminal destinataire, ou d'un identifiant de connexion, ou autres. A ce titre, le processeur PROC et/ou la mémoire DB peuvent encore être utilisés.

Toutefois, la notion de connexion ou de non-connexion du terminal destinataire au serveur de messagerie doit être interprétée au sens large. On cherche à détecter en particulier une possibilité de connexion ou de non-connexion du terminal au serveur de messagerie. Par exemple, si l'on parvient à détecter que le terminal destinataire est connecté au réseau de communication R, alors le terminal destinataire est simplement susceptible de se connecter au serveur de messagerie et il peut être décidé de mettre en œuvre ou non l'affectation du statut d'expiration du message, simplement sur la base de cette information. Ainsi, si le serveur de messagerie ne dispose pas de moyens pour détecter la connexion du terminal destinataire au réseau de communication R, on s'appuie sur d'autres serveurs auxquels peut être connecté le terminal et qui peuvent transmettre au serveur de messagerie cette information de connexion du terminal. A titre d'exemple, on peut s'appuyer ainsi sur un serveur intermédiaire, par exemple un serveur d'applications de réseau social (hébergeant un compte ou une page Facebook^{®} par exemple), capable de notifier au serveur de messagerie une connexion du terminal à ce serveur intermédiaire.

On a représenté sur la figure 2 un exemple de réalisation correspondant. Ici, le terminal TD se connecte au serveur intermédiaire SI (flèche D1) et cette information de connexion est transmise au serveur de messagerie (flèche D2). Dans un mode de réalisation, la connexion du terminal au serveur intermédiaire peut déclencher automatiquement la connexion du terminal au serveur de messagerie. Par exemple, le nombre de messages reçus auprès du serveur de messagerie, pour un compte Facebook donné, peut s'afficher sur une page Facebook individuelle, associée à ce compte donné. De même, l'utilisateur du terminal émetteur peut avoir un compte auprès du même serveur intermédiaire, notamment pour lancer une demande d'expiration du message déjà envoyé (ou simplement, se connecter directement au serveur de messagerie pour demander une expiration du message).

On se réfère maintenant aux figures 3 et 4 pour décrire un exemple de réalisation d'un procédé au sens de la présente invention. Ces figures illustrent des organigrammes correspondant à des algorithmes généraux d'un programme informatique au sens de la présente invention, pour l'affectation d'un statut d'expiration à un message, en fonction de la détection de connexion du terminal destinataire de ce message.

(En référence à la figure 3, suite à l'étape S1 de détection et au test T4 de connexion ou de non-connexion de ce terminal, dans un exemple de réalisation, si le terminal est déjà connecté (flèche OK en sortie du test T4), aucune action n'est entreprise par rapport au message probablement déjà reçu par le terminal destinataire le procédé s'arrête à l'étape de fin S2. Ainsi, le message peut conserver naturellement son statut en cours auprès du terminal destinataire. En revanche, si le terminal n'est pas connecté (flèche KO en sortie du test T4), un statut d'expiration du message est affecté à l'étape S3.)

Dans une variante, il peut être décidé de transmettre au terminal destinataire, à l'étape S2, une commande d'expiration visant un message déjà transmis, de sorte que le terminal destinataire gère de son côté l'expiration de ce message.

Par ailleurs, l'affectation du statut d'expiration à l'étape S3, peut consister simplement à effacer le message, sans qu'il ne soit transmis au terminal destinataire non connecté.

Dans une variante encore, illustrée sur la figure 4, il peut être prévu une temporisation à l'étape S31 avant d'affecter un quelconque statut au message. Ainsi, un compteur de valeur temporelle t peut être décrémenté jusqu'à zéro, tant que cette valeur de zéro n'est pas atteinte (flèche KO en sortie du test T32). En revanche, si la valeur de zéro est atteinte (flèche OK en sortie du test T32), le statut de message expiré est affecté à l'étape S33. Ce statut de message expiré peut simplement correspondre à un effacement du message, sans communication au terminal destinataire. Dans une variante, le message peut être transmis au terminal destinataire ultérieurement et peut apparaître comme étant expiré, avec une présentation adéquate (par exemple en caractères italiques, ou autres).

Bien entendu, la présente invention ne se limite pas à la forme de réalisation décrite ci-avant à titre d'exemple ; elle s'étend à d'autres variantes.

Ainsi, on a décrit ci-avant une réalisation dans laquelle, si le terminal destinataire n'est pas connecté, on peut alors affecter le statut d'expiration au message. Dans une variante toutefois, on peut, au contraire, affecter ce statut si le terminal est connecté pour indiquer à son utilisateur par exemple qu'un événement associé à ce message n'est plus en cours et, par exemple, effacer simplement ce message auprès du serveur de messagerie si le terminal destinataire n'est pas connecté.

Par ailleurs, on entend de façon générale par les termes « statut de message en cours d'expiration », le fait qu'un message doit :
- avoir un statut de message expiré après une temporisation,
- ou avoir directement un statut de message expiré, sans temporisation,
- ou être effacé après une temporisation,
- ou encore être effacé directement, sans temporisation,
et ce, comme présenté dans les différents exemples de réalisation ci-avant.

Par ailleurs, le statut d'expiration affecté ultérieurement à un message peut ne pas nécessairement être lié à une temporisation, mais peut dépendre d'autres conditions comme par exemple la connexion ou la déconnexion du terminal destinataire, notamment d'une page WEB. Par exemple, dans une réalisation, un message reçu par un terminal pendant sa participation à un forum sur un site WEB peut devenir « expiré » après que le terminal se déconnecte du forum.

## Revendications

1. Procédé de gestion d'une base de messages, mis en œuvre par un serveur de messagerie (SM), le procédé comportant les étapes :
sur réception d'une commande d'expiration d'un message (M) destiné à être reçu par un terminal destinataire (TD) dudit message, ladite commande étant accompagnée d'un paramètre de temporisation,
- détecter (S1) si le terminal est connecté au serveur de messagerie ou non (T4),
- si le terminal est détecté comme non-connecté, le serveur de messagerie affecte au message un statut de message en cours d'expiration (S3),
- pour un message en cours d'expiration :
- on applique une temporisation (S31) fonction dudit paramètre, et
- on affecte au message un statut de message expiré après ladite temporisation et le message est effacé.

2. Procédé selon la revendication 1, dans lequel, si le terminal est détecté comme connecté, le serveur ne transmet aucune commande au terminal destinataire et le message conserve un statut en cours auprès du terminal destinataire.

3. Procédé selon l'une des revendications précédentes, dans lequel, le message ayant été préalablement envoyé au terminal destinataire, le serveur de messagerie transmet au terminal une commande d'affectation audit message d'un statut de message en cours d'expiration auprès du terminal destinataire.

4. Procédé selon la revendication 1, dans lequel un message à statut de message expiré est conservé auprès du terminal destinataire, avec une indication d'expiration du message.

5. Procédé selon l'une des revendications précédentes, dans lequel le message est effacé dès l'affectation du statut de message en cours d'expiration.

6. Procédé selon l'une des revendications précédentes, dans lequel l'affectation du statut de message en cours d'expiration fait suite à une requête d'expiration reçue d'un terminal émetteur du message.

7. Procédé selon la revendication 6, dans lequel la suppression d'un message auprès du terminal émetteur provoque l'émission de la requête d'expiration vers le serveur.

8. Procédé selon l'une des revendications précédentes, dans lequel la détection de connexion du terminal au serveur de messagerie comporte la détection de connexion du terminal à un serveur intermédiaire (SI) connecté au serveur de messagerie.

9. Procédé selon la revendication 8, dans lequel le serveur de messagerie interroge régulièrement le serveur intermédiaire pour obtenir une information de connexion ou de non-connexion du terminal destinataire au serveur intermédiaire.

10. Procédé selon la revendication 8, dans lequel le serveur intermédiaire comporte des moyens de connexion instantanée du terminal destinataire au serveur de messagerie et une connexion du terminal destinataire au serveur intermédiaire provoque une connexion du terminal destinataire au serveur de messagerie.

11. Serveur de messagerie pour la gestion d'une base de messages, ledit serveur comportant des moyens configurés pour l'exécution du procédé selon les revendications 1à 10.

12. Programme informatique, comportant des instructions pour la mise en œuvre du procédé selon l'une des revendications 1 à 10, lorsque ce programme est exécuté par un processeur.

## Patentansprüche

1. Verfahren zur Verwaltung einer Nachrichtendatenbank, implementiert durch einen Nachrichtenserver (SM), wobei das Verfahren die folgenden Schritte umfasst:
nach Empfang eines Ablaufbefehls für eine Nachricht (M), die von einem Empfängerendgerät (TD) der Nachricht empfangen werden soll, wobei der Befehl von einem Verzögerungsparameter begleitet wird,
- Erkennen (S1), ob das Endgerät mit dem Nachrichtenserver verbunden ist oder nicht (T4),
- wenn das Endgerät als nicht verbunden erkannt wird, weist der Nachrichtenserver der Nachricht den Status einer ablaufenden Nachricht (S3) zu,
- bei einer ablaufenden Nachricht:
- wird eine Verzögerung (S31) in Abhängigkeit des genannten Parameters angewendet, und
- wird der Nachricht ein nach der Verzögerung der Status einer abgelaufenen Nachricht zugewiesen und die Nachricht wird gelöscht.

2. Verfahren nach Anspruch 1, wobei, wenn das Endgerät als verbunden erkannt wird, der Server keine Befehle an das Empfängerendgerät überträgt und die Nachricht einen aktuellen Status bei dem Empfängerendgerät beibehält.

3. Verfahren nach einem der vorhergehenden Ansprüche, wobei der Nachrichtenserver, nachdem die Nachricht zuvor an das Empfängerendgerät gesendet wurde, dem Endgerät einen Befehl überträgt, um der Nachricht einen Status einer ablaufenden Nachricht bei dem Empfängerendgerät zuzuweisen.

4. Verfahren nach Anspruch 1, wobei eine Nachricht mit einem Status einer abgelaufenen Nachricht am Empfängerendgerät mit einem Hinweis auf das Ablaufen der Nachricht beibehalten wird.

5. Verfahren nach einem der vorhergehenden Ansprüche, wobei die Nachricht gelöscht wird, sobald der Status der ablaufenden Nachricht zugewiesen wird.

6. Verfahren nach einem der vorhergehenden Ansprüche, wobei die Zuweisung des Status einer ablaufenden Nachricht auf eine von einem Nachrichtensenderendgerät empfangene Ablaufanfrage folgt.

7. Verfahren nach Anspruch 6, wobei das Löschen einer Nachricht am Sendeendgerät das Senden der Ablaufanfrage an den Server bewirkt.

8. Verfahren nach einem der vorhergehenden Ansprüche, wobei die Erkennung der Verbindung des Endgeräts mit dem Nachrichtenserver die Erkennung der Verbindung des Endgeräts mit einem mit dem Nachrichtenserver verbundenen Zwischenserver (SI) umfasst.

9. Verfahren nach Anspruch 8, wobei der Nachrichtenserver den Zwischenserver regelmäßig abfragt, um Informationen über die Verbindung oder Nichtverbindung des empfangenden Endgeräts mit dem Zwischenserver zu erhalten.

10. Verfahren nach Anspruch 8, wobei der Zwischenserver Mittel zur sofortigen Verbindung des Empfängerendgeräts mit dem Nachrichtenserver umfasst und eine Verbindung des Empfängerendgeräts mit dem Zwischenserver eine Verbindung des Empfängerendgeräts mit dem Nachrichtenserver bewirkt.

11. Nachrichtenserver zur Verwaltung einer Nachrichtendatenbank, wobei der Server Mittel umfasst, die für die Ausführung des Verfahrens nach den Ansprüchen 1 bis 10 eingerichtet sind.

12. Computerprogramm, das Anweisungen zur Durchführung des Verfahrens nach einem der Ansprüche 1 bis 10 umfasst, wenn dieses Programm von einem Prozessor ausgeführt wird.

## Claims

1. A method for managing a message base, implemented by a messaging server (SM), the method including the steps of:
upon receiving an expiration command of a message (M) to be received by a recipient terminal (TD) of said message, said command being accompanied by a timeout parameter,
- detecting (S1) whether the terminal is connected to the messaging server or not (T4),
- if the terminal is detected as not connected, the messaging server assigns the message a currently expiring message status (S3),
- for a currently expiring message:
- a delay (S31) as a function of said parameter is applied, and
- the message is assigned an expired message status after said timeout and the message is deleted.

2. The method according to claim 1, wherein, if the terminal is detected as connected, the server does not transmit any command to the recipient terminal and the message retains a current status at the recipient terminal.

3. The method according to one of the preceding claims, wherein, having previously sent the message to the recipient terminal, the messaging server transmits to the terminal a command to assign said message a currently expiring message status at the recipient terminal.

4. The method of claim 1, wherein a message with an expired message status is retained at the recipient terminal, with an expiration indication for the message.

5. The method according to any one of the preceding claims, wherein the message is deleted as soon as the currently expiring message status is assigned.

6. The method according to one of the preceding claims, wherein assigning the currently expiring message status follows an expiration request received from a terminal emitting the message.

7. The method according to claim 6, wherein deleting a message at the emitting terminal causes the expiration request to be emitted to the server.

8. The method according to one of the preceding claims, wherein detecting connection of the terminal to the messaging server includes detecting connection of the terminal to an intermediate server (IS) connected to the messaging server.

9. The method of claim 8, wherein the messaging server regularly queries the intermediate server to obtain information of connection or non-connection of the recipient terminal to the intermediate server.

10. The method according to claim 8, wherein the intermediate server includes means for instantly connecting the recipient terminal to the messaging server, and connection of the recipient terminal to the intermediate server causes connection of the recipient terminal to the messaging server.

11. A messaging server for managing a message base, said server including means configured to execute the method according to claims 1 to 10.

12. A computer program, including instructions for implementing the method according to one of claims 1 to 10, when this program is executed by a processor.
